# EUROPÄISCHE PATENTSCHRIFT

(11) **EP 0 510 594 B1**
(45) Veröffentlichungstag und Bekanntmachung des Hinweises auf die Patenterteilung: **03.12.1997**
(21) Anmeldenummer: 92106843.3
(22) Anmeldetag: 22.04.1992
(51) Int. Cl.: F27D 1/00, F27D 1/14, F27D 1/06

(54) **Wärmeschutzverkleidung**
Heat insulating ladding
Revêtement de protection thermique

(30) Priorität: 24.04.1991 DE 9105022 U; 11.09.1991 DE 9111248 U
(43) Veröffentlichungstag der Anmeldung: 28.10.1992
(73) Patentinhaber: Gossler Thermal Ceramics GmbH, 21465 Reinbek (DE)
(72) Erfinder: Riedel, Hartmut, 4995 Stemwede 1 (DE); Schultz, Adolf, 2056 Glinde (DE)
(74) Vertreter: Liebelt, Rolf, Dipl.-Ing.

(56) Entgegenhaltungen:
- DE-A- 1 045 585
- DE-A- 2 831 151
- FR-A- 2 216 843
- FR-A- 2 507 594
- GB-A- 2 159 253
- Firmenprospekt LAFARGE REFRACTAIRES 1985

## Beschreibung

Die Erfindung betrifft eine Wärmeschutzverkleidung von Wänden, Decken od. dgl. (Wandungen) von Hochtemperatureinrichtungen, insbesondere Industrieöfen, die aus lückenlos aneinandergereihten sowie an der Wandung befestigten quaderförmigen Körpern (Modulen) gebildet ist, die aus einer Vielzahl zusammengehaltener und verdichteter sowie in einer zur Wandung parallelen Richtung vorgespannter Fasermattenbahnen bestehen.

Bei einer derartigen aus Modulen aufgebauten Wärmeschutzverkleidung von Industrieöfen oder anderen Hochtemperatureinrichtungen werden die Module vor und während der Montage an der Wandung von Spannelementen wie Bändern, Kartonagen oder Hölzern zusammengepreßt, d. h. unter Vorspannung gehalten. Nachdem eine zu isolierende Fläche oder Wandung mit derartigen Modulen vollständig bestückt ist, werden die Spannelemente gelöst, worauf die Module auffedern und die durch die Montage bedingten Spalten oder Fugen zwischen den einzelnen Modulen geschlossen werden. Dabei hat sich auch der Einsatz von Fasermattenbahnen aus feuerfesten Werkstoffen wie Metalloxid-Zusammensetzungen als Isolierwerkstoff beim Aufbau der Module bewährt, weil derartige Materialien hohen Temperaturen standhalten können. Problematisch bei diesen Wärmeschutzverkleidungen ist jedoch, daß Keramikfasern schrumpfen, wenn sie längerer Zeit höheren Temparaturen ausgesetzt sind. Dies führt dazu, daß sich Spalten, insbesondere an den Fugen zwischen den nicht unter Vorspannung stehenden Seiten benachbarter Module in der Wärmeschutzverkleidung bilden. Diese Spalten können sich von der Oberfläche der Wärmeschutzverkleidung bis zu der zu isolierenden Wandung erstrecken. Um Beschädigungen der Wandung aufgrund von Temperaturdurchschlägen an den Spalten zu verhindern, ist eine stete Kontrolle der Wärmeschutzverkleidung und Beseitigung der Spalten durch Ausfüllen mit Isolierwerkstoffen unerläßlich.

In dem Firmenprospekt Lafarge refractaires Fibres ceramiques 1985 wird eine aus Modulen, die aus Fasermatten oder Faserbahnen bestehen, gebildete Wärmeschutzverkleidung von Wänden gemäß dem Oberbegriff des Anspruches 1 und die Befestigung der Module an der zu schützenden Wand beschrieben. Zur Befestigung jedes Modules an der Wand dient eine Befestigungsschiene aus Metall. Diese Befestigungsschiene ist als Bügel ausgebildet, dessen über einen Steg verbundene Schenkel sich parallel zur Wand durch das vor der Montage an der Wand unter Vorspannung stehende Modul erstrecken und mit den freien Enden aus dem Modul ragen. Der Steg liegt dabei an einer Seite des Modules an und weist zwei seitliche und eine mittlere ringförmige Umbiegung auf. Die Ringöffnungen der seitlichen Umbiegungen sind so ausgerichtet, daß die freien Enden der Schenkel des Befestigungsbügels eines angrenzenden Modules in diese Ringöffnungen bei der Montage des Nachbarmodules eingesteckt werden können, während die mittlere Ringöffnung an der Wand anliegt und zur Aufnahme eines an der Wand gehaltenen Befestigungsmittels, z. B. eines Schraubenbolzens, dient, um das Modul und folglich die gesamte Wärmeschutzverkleidung an der Wand festzuhalten. Trotz der Vorspannung, die die Module zum Zeitpunkt der Montage einer Wärmeschutzverkleidung aufweisen, sind die von dieser Vorspannung ausgehenden Kräfte nicht ausreichend, um das durch Hitzeeinwirkung ausgelöste Schrumpfen des Fasermaterials der Module zu kompensieren, so daß an den Berührungsflächen angrenzender Module sowie Fasermattenbahnen sich Fugen bilden.

Die der Erfindung zugrundeliegende Aufgabe besteht deshalb darin, die aus Modulen aus Fasermattenbahnen bestehende Wärmeschutzverkleidung der eingangs beschriebenen Art so auszubilden, daß sie eine hervorragende Isolierwirkung bei Vermeidung einer Spaltenbildung gewährleistet.

Diese Aufgabe wird bei der gatttungsgemäßen Wärmeschutzverkleidung erfindungsgemäß dadurch gelöst, daß mindestens ein abwechselnd knickfrei durch die vorspannungsfreien Seiten aneinander angrenzende Module geführtes und sich von der Oberfläche der Wärmeschutzverkleidung bis zur Wandung erstreckendes fadenförmiges und temperaturbeständiges Verbindungsmittel die Module im dauerelastischen Verbund zusammenhält.

Durch das erfindungsgemäße Befestigen angrenzender Module an deren vorspannungsfreien Seiten mit einem knickfrei geführten fadenförmigen und temperaturbeständigen Verbindungsmittel, das zweckmäßigerweise aus Mineral-, insbesondere keramischen Fasern gefertigt ist und sich wendelförmig durch die Module auf beiden Seiten einer Stoß- oder Trennfuge erstreckt, wird ein dauerelastischer Verbund zwischen den Modulen erhalten, der beim Schrumpfen der Module unter Temperatureinwirkung die durch die Montage bedingten Fugen zwischen den vorspannungsfreien Seiten der Module sicher zusammenhält. Da somit ein Temperaturdurchschlag durch die Isolierung nicht zu befürchten ist, kann auf die Kontrolle der Wärmeschutzverkleidung nach der Erfindung auf Spaltenbildung verzichtet werden, wodurch eine im wesentlichen wartungsfreie Hochtemperaturisolierung von Industrieöfen oder dgl. erhalten wird. Der Gefahr der Spaltenbildung und damit des Temperaturdurchschlages kann noch dadurch entgegengewirkt werden, daß die Module von der heißen Seite her mit parallel zu deren vorspannungsfreien Seiten verlaufenden Einschnitten versehen werden, um das Schrumpfen jedes Modules auf mehrere kleine Fugen zu verteilen.

Das Lösen und Entfernen der Spannelemente nach erfolgter Befestigung der Module an der zu isolierenden Ofenfläche ist durch das Auffedern der Module mühsam. Das notwendige Entfernen der Spannelemente bedingt aber auch, daß der Montagespalt oder die Montagefuge zwischen den Modulen nicht beliebig klein gemacht werden kann, da der Zugriff zu den Spannelementen nicht nur erschwert, sondern unmöglich wird. Bei einer zweckmäßigen Weiterbildung der Erfindung hat es sich deshalb bewährt, die Wärmeschutzverkleidung aus Modulen zu errichten, bei denen sich durch mindestens zwei von deren verdichteten Fasermattenbahnen ein fadenförmiges Verbindungsmittel aus einem nicht hitzebeständigen, vorzugsweise organischen Werkstoff erstreckt, das die Fasermattenbahnen miteinander verbindet und als vorgespannten quaderförmigen Körper zusammenhält. Durch dieses erfindungsgemäße Befestigen der Fasermattenbahnen eines Modules mit einem fadenförmigen Verbindungsmittel aneinander, das knickfrei, vorzugsweise wendelförmig durch die Fasermattenbahnen geführt ist, entfällt das aufwendige Entfernen und Entsorgen der Spannelemente nach der Montage der Module an der zu isolierenden Fläche, da das organische Verbindungsmittel nicht hitzebeständig ist und somit unter der Einwirkung höherer Temperaturen verbrennt, wodurch die vorgespannten Module auffedern und die durch die Montage bedingten Fugen zwischen den Modulen geschlossen werden. Diese Fugen können sehr schmal gehalten werden, da nach der Montage der Module ein Zugriff zu den Spannelementen nicht erforderlich ist, wodurch einem Aufbrechen der Fugen zwischen den Modulen durch Schrumpfen des Fasermaterials unter Hitzeeinwirkung weiter entgegengewirkt und die Wartungsfreiheit der erfindungsgemäßen Wärmeschutzverkleidung verbessert wird. Der Spaltenbildung in den Fugen zwischen den Modulen kann weiterhin noch dadurch entgegengewirkt werden, daß die Module auf der heißen Seite mit zu den vorspannungsfreien Seiten parallelen Einschnitten versehen sind.

Die Eigenschaften der erfindungsgemäßen Wärmeschutzverkleidung, wie insbesondere die Temperaturbeständigkeit, sind vom Werkstoff der Fasermattenbahnen abhängig, aus denen die Module für diese Verkleidung gefertigt sind. Dabei steigen die Werkstoffkosten mit zunehmender Temperaturbeständigkeit der Fasermattenbahnen der Module, so daß Verkleidungen von Wandungen in Hochtemperaturöfen sehr kostspielig sind. Zur Senkung dieser Kosten bestehen bei einer anderen Ausbildung der Erfindung die Module aus einer Vielzahl von zu einem quaderförmigen Grundkörper zusammengehaltener Fasermattenbahnen und ist an der von der zu verkleidenden Wandung wegweisenden Fläche des quaderförmigen Grundkörpers mindestens ein weiterer aus Fasermattenbahnen anderer Qualität gefertigter Körper mit einem knickfrei geführten fadenförmigen und hitzebeständigen Verbindungsmittel, vorzugsweise aus keramischen Fasern, befestigt. Durch diesen erfindungsgemäßen Aufbau des Modules mit zwei Körpern aus Fasermattenbahnen unterschiedlicher Qualität ist es nicht nur möglich, den der Ofenatmosphäre ausgesetzten Teil des Modules aus einem hochwertigeren Werkstoff als den anderen an die Wandung des Ofens angrenzenden Bereich des Modules zu fertigen, wodurch erhebliche Einsparungen an Materialkosten für das Modul zu erzielen sind. Diese erfindungsgemäße Befestigung der zwei Körper des Modules aneinander mit dem fadenförmigen Verbindungsmittel, das zweckmäßigerweise wendelförmig durch das Modul geführt ist, bietet weiter den Vorteil, daß an der Verbindungsstelle der zwei Körper auftretende, von der unterschiedlichen Werkstoffqualität der Fasermattenbahnen ausgehende Spannungen die Festigkeit der Verbindung nicht beeinträchtigen.

Ausführungsbeispiele der erfindungsgemäßen Wärmeschutzverkleidung werden noch an Hand der Zeichnungen beschrieben. Es stellen dar:
- Fig. 1: eine schematisch-perspektivische Ansicht einer ersten Ausführungsform der Wärmeschutzverkleidung nach der Erfindung,
- Fig. 2: im anderen Maßstab eine schematische Draufsicht auf die Wärmeschutzverkleidung nach Fig. 1,
- Fig. 3: eine schematisch-perspektivische Ansicht einer anderen Ausführungsform der Wärmeschutzverkleidung nach der Erfindung,
- Fig. 4: im anderen Maßstab eine schematische Draufsicht auf die Wärmeschutzverkleidung nach Fig. 3,
- Fig. 5: eine schematisch-perspektivische Ansicht einer weiteren Ausführungsform der Wärmeschutzverkleidung nach der Erfindung,
- Fig. 6: im anderen Maßstab eine schematische Draufsicht auf die Wärmeschutzverkleidung nach Fig. 5,
- Fig. 7: eine schematisch-perspektivische Ansicht eines Modules der Wärmeschutzverkleidung nach Fig. 3 und 4,
- Fig. 8: eine schematische Draufsicht auf das Modul nach Fig. 7,
- Fig. 9: im anderen Maßstab eine schematisch-perspektivische Ansicht des Modules nach Fig. 7 und 8, wobei Teile weggebrochen sind,

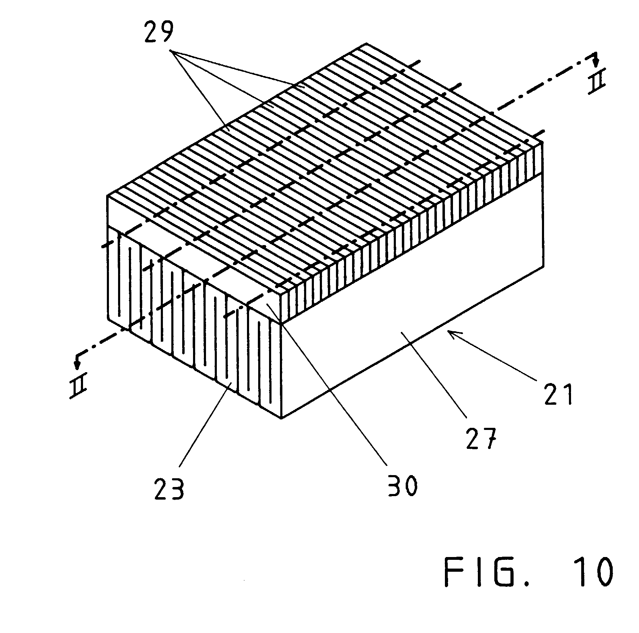

- Fig. 10: eine schematisch-perspektivische Ansicht eines Modules der Wärmeschutzverkleidung nach Fig. 5 und 6,

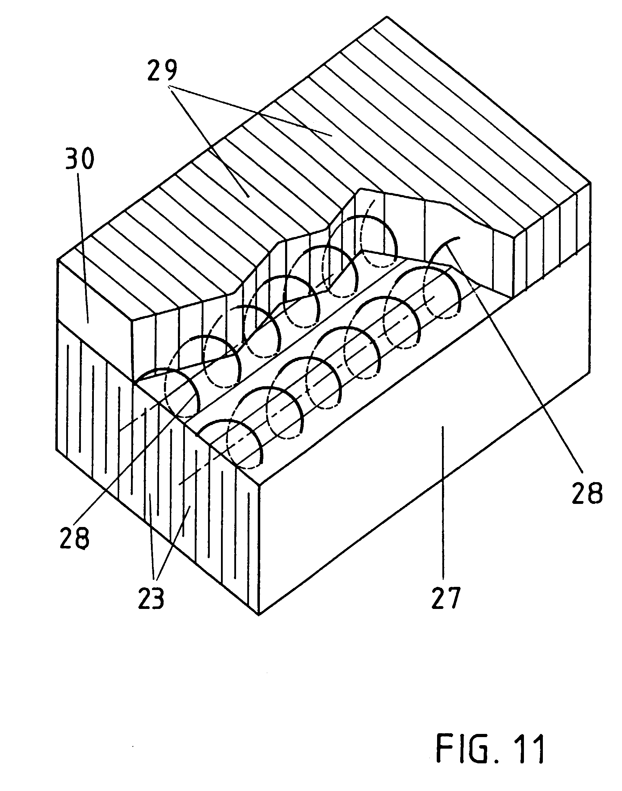

- Fig. 11: im anderen Maßstab eine schematisch-perspektivische Ansicht des Modules nach Fig. 10, wobei Teile weggebrochen sind,

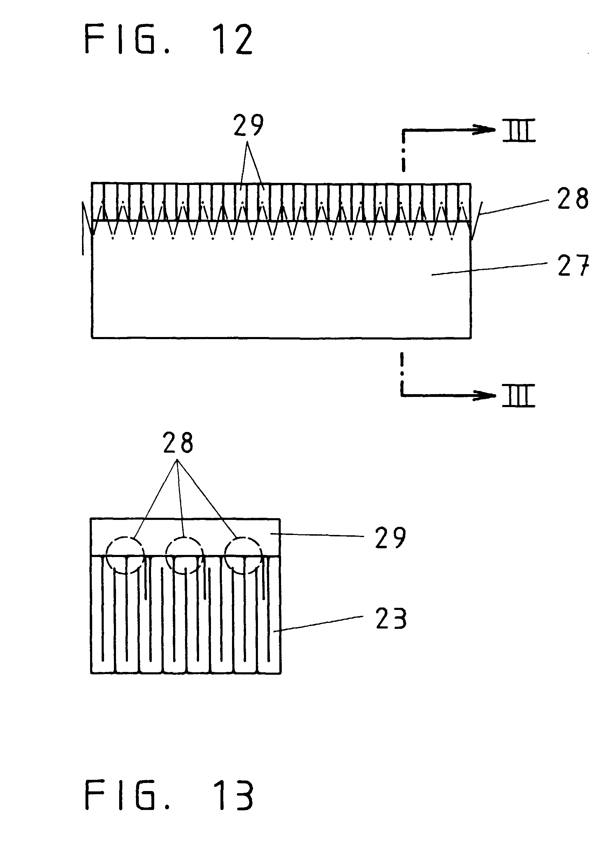

- Fig. 12: eine schematische Schnittansicht des Modules nach Fig. 10 längs der Linie II - II der Fig. 10 im anderen Maßstab,
- Fig. 13: eine schematische Schnittansicht des Modules nach Fig. 10 längs der Linie III - III der Fig. 12.

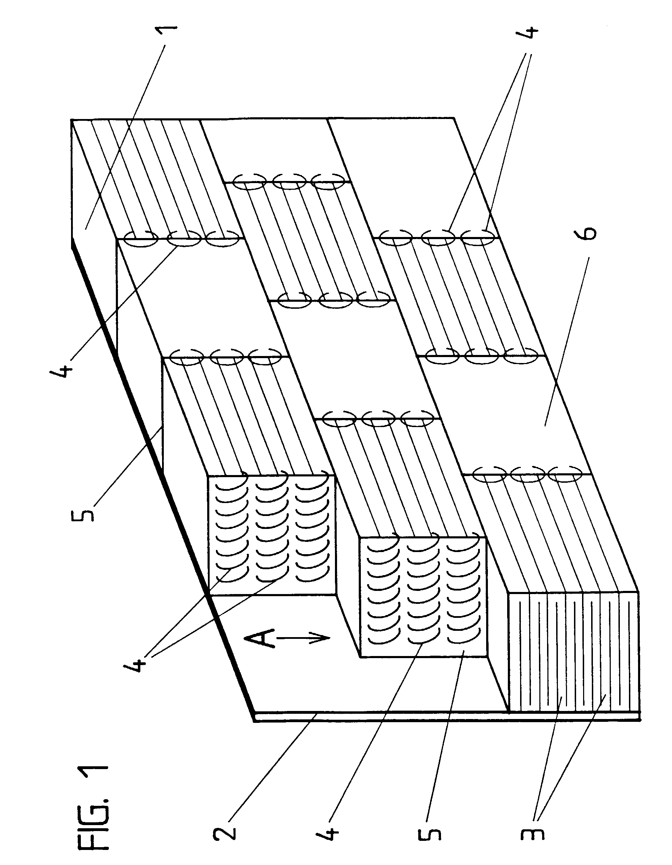

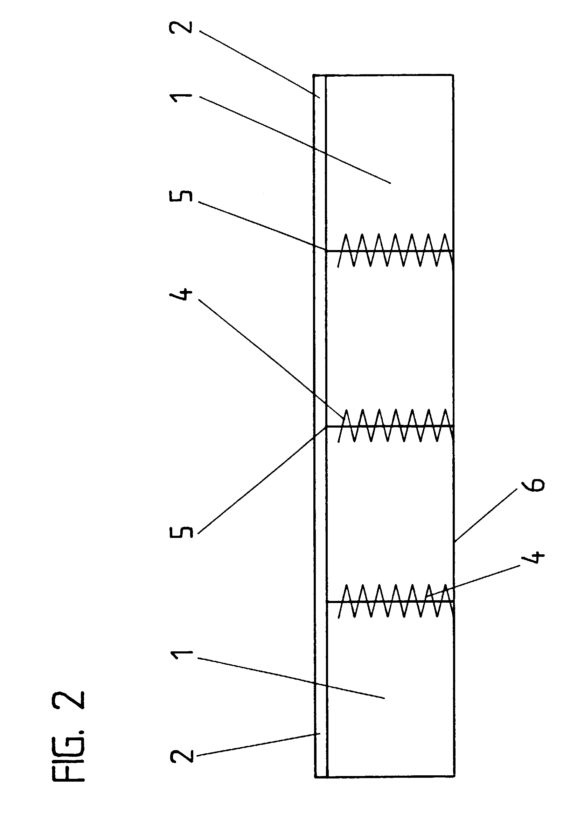

Die in den Fig. 1 und 2 dargestellte Wärmeschutzverkleidung umfaßt eine Vielzahl von quaderförmigen Körpern oder Modulen 1, die an einer zu isolierenden Wandung 2 eines Industrieofens mit an sich bekannten Elementen (nicht gezeigt) befestigt sind. Die Module 1, von denen die Spannelemente entfernt sind, die sie unter Vorspannung halten, bestehen aus einer Vielzahl von Fasermattenbahnen 3, die parallel zur Wandung 2 in Richtung des Pfeiles A vorgespannt sind. Die aneinander angrenzenden Module 1 sind mit wendelförmig geführten fadenförmigen und temperaturbeständigen Verbindungsmitteln 4 an den vorspannungsfreien Seiten 5 im dauerelastischen Verbund zusammengehalten. Das Verbindungsmittel 4 erstreckt sich dabei von der heißen Seite oder Oberfläche 6 der Wärmeschutzverkleidung bis zur Wandung 2.

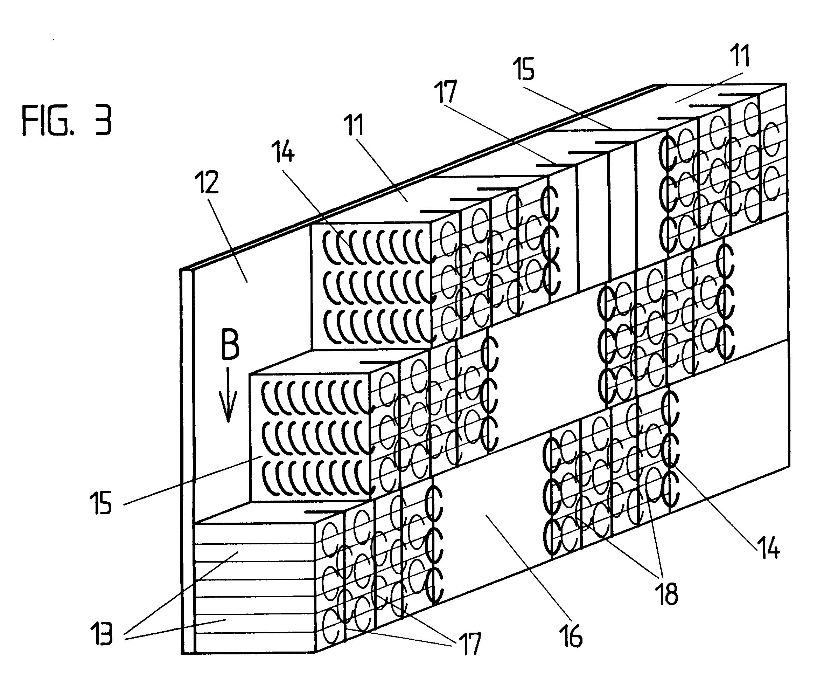

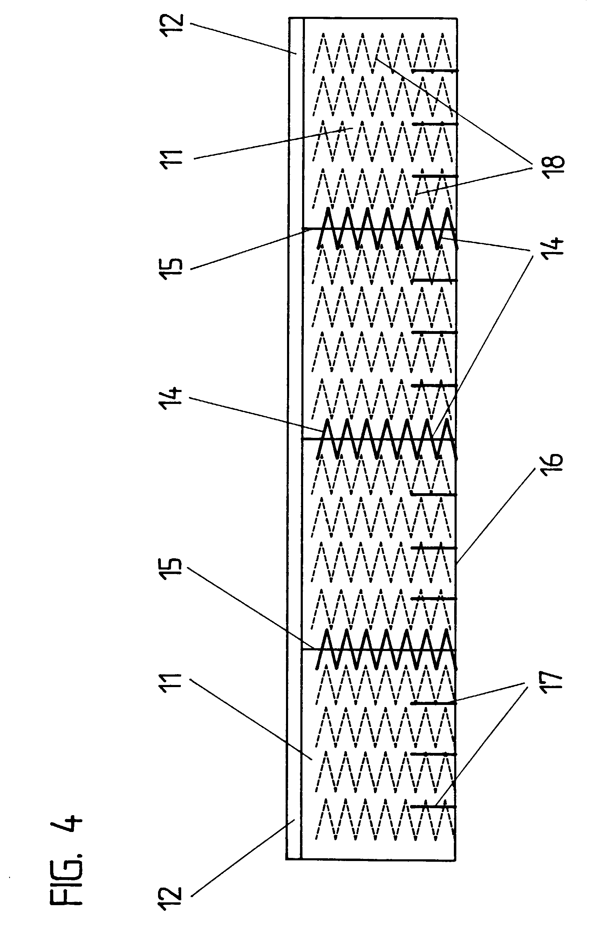

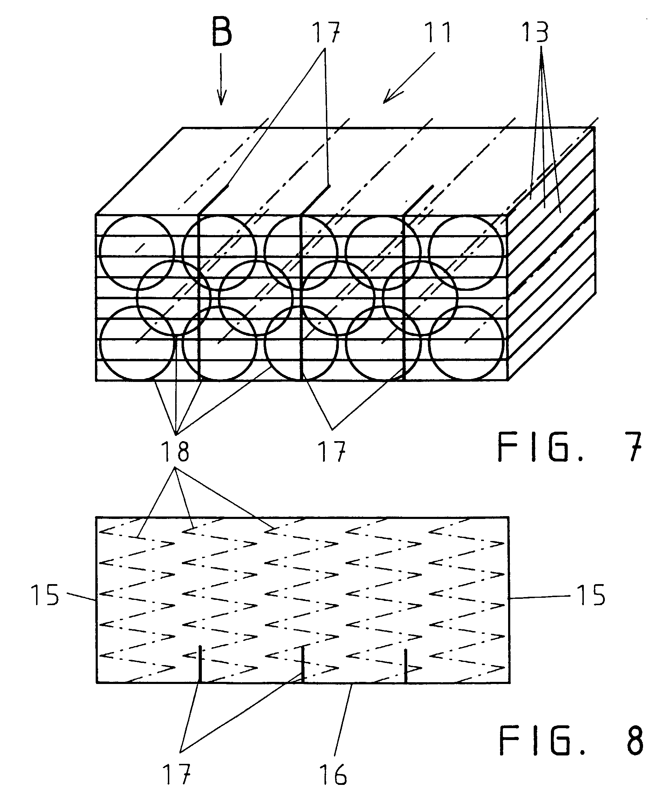

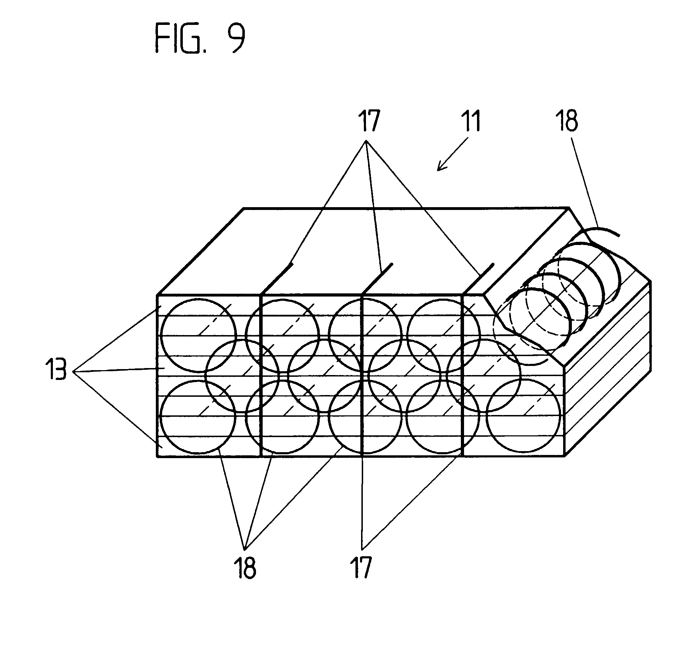

Für die in den Fig. 3 und 4 dargestellte Wärmeschutzverkleidung sind gleichfalls eine Vielzahl von quaderförmigen Körpern oder Modulen 11 lückenlos aneinandergereiht, die an einer zu isolierenden Wandung 12 eines Industrieofens mit an sich bekannten Elementen (nicht gezeigt) befestigt sind. Diese Module 11 (siehe auch Fig. 7 bis 9) bestehen gleichfalls aus einer Vielzahl übereinander angeordneter Fasermattenbahnen 13, die in einer Preßvorrichtung um 25 bis 40 % verdichtet und in Richtung des Pfeiles B auf Vorspannung gebracht sind. In dieser vorgespannten Lage werden die Fasermattenbahnen 13 untereinander mit einem knickfrei geführten fadenförmigen Verbindungsmittel 18 aus einem organischen Werkstoff verbunden, so daß nach Entspannen der Preßvorrichtung die Module 11 formstabil vorgespannt bleiben. Die aneinander angrenzenden und auf diese Weise vorgespannten Module 11 der Wärmeschutzverkleidung sind - wie es vorstehend in Verbindung mit Fig. 1 und 2 beschrieben ist - an den vorspannungsfreien Seiten 15 mit einem temperaturbeständigen fadenförmigen Verbindungsmittel 14 im dauerelastischen Verbund zusammengehalten. Auf der heißen Seite oder Oberfläche 16 der Wärmeschutzverkleidung weisen die Module 11 zur vorspannungsfreien Seite 15 parallele Einschnitte 17 auf, die im Abstand von etwa 50 bis 100 mm vorgesehen sind und sich etwa zu 1/4 bis 1/3 der Tiefe des Modules 11 in dasselbe hinein erstrecken.

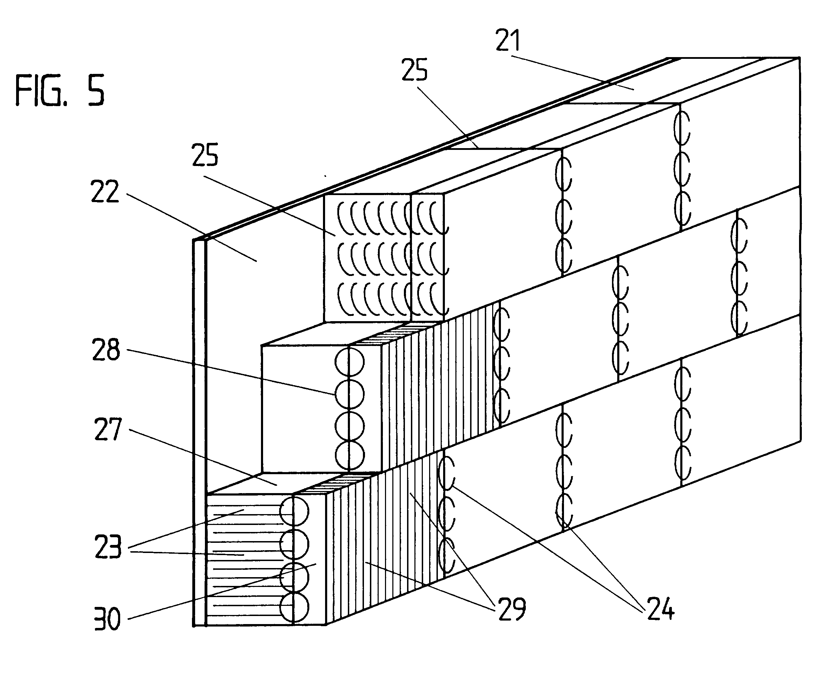

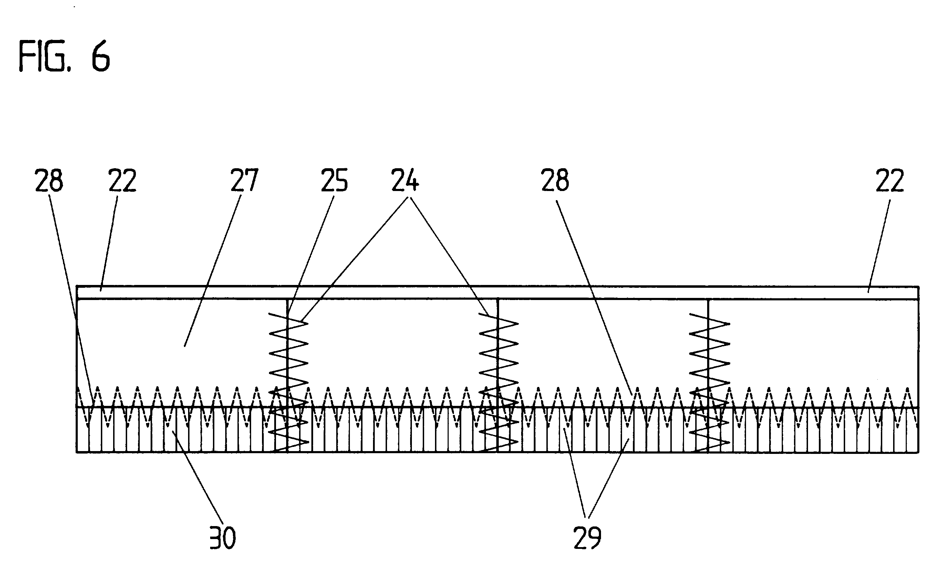

Bei der in den Fig. 5 und 6 gezeigten Wärmeschutzverkleidung sind zur Isolierung einer Wandung 22 eines Ofens ebenfalls eine Vielzahl von quaderförmigen Körpern oder Modulen 21 aus Fasermattenbahnen 23 und 29 mit nicht dargestellten Elementen an der Wandung 22 befestigt und miteinander an angrenzenden Seiten 25 in der oben beschriebenen Weise mit einem temperaturbeständigen fadenförmigen Verbindungsmittel 24 im dauerelastischen Verbund zusammengehalten. Das Modul 21 umfaßt einen Grundkörper 27 aus zick-zackförmig gefalteten Fasermattenbahnen 23. Quer zur Faltrichtung der Fasermattenbahn 23 sind auf der zum Ofeninneren weisenden Fläche des Grundkörpers 27 die Falten übergreifend Fasermattenbahnen 29, die zu einem zweiten Körper 30 auf nicht gezeigte Weise vereinigt sind, so angeordnet, daß eine Schmalseite der Fasermattenbahnen 29 am Grundkörper 27 anliegt. Der Grundkörper 27 und der zweite Körper 30 sind mit einem fadenförmigen und hitzebeständigen Verbindungsmittel 28, das wendelförmig durch diese Körper 27 und 30 geführt ist, aneinander befestigt. Dabei weisen die Fasermattenbahnen 23 des Grundkörpers 27 und der Fasermattenbahnen 29 des zweiten Körpers 30 unterschiedliche Eigenschaften auf.

## Patentansprüche

1. Wärmeschutzverkleidung von Wänden, Decken od. dgl. (Wandungen) (2, 12, 22) von Hochtemperatureinrichtungen, insbesondere Industrieöfen, die aus lückenlos aneinander gereihten sowie an der Wandung (2, 12, 22) befestigten quaderförmigen Körpern (Modulen) (1, 11, 21) gebildet ist, die aus einer Vielzahl zusammengehaltener und verdichteter sowie in einer zur Wandung (2, 12, 22) parallelen Richtung unter Vorspannung stehender Fasermattenbahnen (3, 13, 23, 29) bestehen, dadurch gekennzeichnet, daß mindestens ein abwechselnd knickfrei durch die vorspannungsfreien Seiten (5, 15, 25) aneinander angrenzender Module (1, 11, 21) geführtes und sich von der Oberfläche (6, 16) der Wärmeschutzverkleidung bis zur Wandung (2, 12, 22) erstreckendes fadenförmiges und temperaturbeständiges Verbindungsmittel (4, 14, 24) die Module (1, 11, 21) im dauerelastischen Verbund zusammenhält.

2. Wärmeschutzverkleidung nach Anspruch 1, dadurch gekennzeichnet, daß das fadenförmige Verbindungsmittel (4, 14, 24) wendelförmig geführt ist.

3. Wärmeschutzverkleidung nach Anspruch 1 oder 2, dadurch gekennzeichnet, daß das fadenförmige Verbindungsmittel (4, 14, 24) aus keramischen Fasern besteht.

4. Wärmeschutzverkleidung nach einem der vorhergehenden Ansprüche, dadurch gekennzeichnet, daß die Module (11) auf der heißen Seite (16) mit parallel zu deren vorspannungsfreien Seiten (15) verlaufenden Einschnitten (17) versehen sind.

5. Wärmeschutzverkleidung nach Anspruch 4, dadurch gekennzeichnet, daß die Einschnitte (17) im Abstand von 50 bis 100 mm vorgesehen sind.

6. Wärmeschutzverkleidung nach Anspruch 4 oder 5, dadurch gekennzeichnet, daß die Einschnitte (17) sich etwa zu 1/4 bis 1/3 der Tiefe des Modules (11) in dieses hinein erstrecken.

7. Wärmeschutzverkleidung nach einem der Ansprüche 1 bis 6, dadurch gekennzeichnet, daß abwechselnd durch mindestens zwei der verdichteten Fasermattenbahnen (13) der Module (1, 11, 21) ein fadenförmiges Verbindungsmittel (18) aus nicht hitzebeständigem Werkstoff, vorzugsweise knickfrei geführt ist, das die Fasermattenbahnen (23) miteinander verbindet und als vorgespannten quaderförmigen Körper (11) zusammenhält.

8. Wärmeschutzverkleidung nach Anspruch 7, dadurch gekennzeichnet, daß das fadenförmige Verbindungsmittel (18) aus einem organischen Werkstoff besteht.

9. Wärmeschutzverkleidung nach Anspruch 7 oder 8, dadurch gekennzeichnet, daß das fadenförmige Verbindungsmittel (18) wendelförmig geführt ist.

10. Wärmeschutzverkleidung nach einem der Ansprüche 1 bis 3, dadurch gekennzeichnet, daß an der von der Wandung (22) wegweisenden Fläche des quaderförmigen Grundkörpers (27) des Modules (21) mindestens ein weiterer aus Fasermattenbahnen (29) anderer Qualität gefertigter Körper (30) mit einem knickfrei geführten fadenförmigen und hitzebeständigen Verbindungsmittel (28) befestigt ist.

11. Wärmeschutzverkleidung nach Anspruch 10, dadurch gekennzeichnet, daß das fadenförmige Verbindungsmittel (28) wendelförmig geführt ist.

12. Wärmeschutzverkleidung nach Anspruch 10 oder 11, dadurch gekennzeichnet, daß das fadenförmige Verbindungsmittel (28) aus keramischen Fasern besteht.

## Claims

1. Heat insulating cladding for walls, ceilings or the like (walling) (2, 12, 22) of high temperature installations, in particular industrial furnaces, which is formed from continuously aligned cuboidal bodies (modules) (1, 11, 21) which are fastened on the walling (2, 12, 22) and consist of a plurality of compacted fibrous mat webs (3, 13, 23, 29) which are held together and biased in a direction parallel to the walling (2, 12, 22), characterised in that at least one thread-like temperature-resistant connecting means (4, 14, 24) which is guided alternately in a kink-free manner through the unbiased sides (5, 15, 25) of adjacent modules (1, 11, 21) and extends from the surface (6, 16) of the heat insulating cladding to the walling (2, 12, 22) holds the modules (1, 11, 21) together in a permanently flexible composite.

2. Heat insulating cladding according to claim 1, characterised in that the thread-like connecting means (4, 14, 24) is guided spirally.

3. Heat insulating cladding according to claim 1 or 2, characterised in that the thread-like connecting means (4, 14, 24) consists of ceramic fibres.

4. Heat insulating cladding according to one of the preceding claims, characterised in that the modules (11) are provided, on the hot side (16), with incisions (17) extending parallel to their unbiased sides (15).

5. Heat insulating cladding according to claim 4, characterised in that the incisions (17) are provided at intervals of 50 to 100 mm.

6. Heat insulating cladding according to claim 4 or 5, characterised in that the incisions (17) extend into the module (11) by about 1/4 to 1/3 of the depth of the module (11).

7. Heat insulating cladding according to one of claims 1 to 6, characterised in that a thread-connecting means (18) which consists of a material which is not resistant to heat, connects the fibrous mat webs (23) to one another and holds them together as a biased cuboidal body (11) is guided, preferably in a kink-free manner, alternately through at least two of the compacted fibrous mat webs (13) of the modules (1, 11, 21).

8. Heat insulating cladding according to claim 7, characterised in that the thread-like connecting means (18) consists of an organic material.

9. Heat insulating cladding according to claim 7 or 8, characterised in that the thread-like connecting means (18) is guided spirally.

10. Heat insulating cladding according to one of claims 1 to 3, characterised in that at least one further body (30) produced from fibrous mat webs (29) of a different quality is fastened to a thread-like heat-resistant connecting means (28) which is guided in a kink-free manner, on the face of the cuboidal base (27) of the module (21) remote from the walling (22).

11. Heat insulating cladding according to claim 10, characterised in that the thread-like connecting means (28) is guided spirally.

12. Heat insulating cladding according to claim 10 or 11, characterised in that the thread-like connecting means (28) consists of ceramic fibres.

## Revendications

1. Revêtement de protection thermique pour murs, plafonds ou analogues (parois) (2, 12, 22) pour dispositifs à haute température, notamment des fours industriels, qui est formé de corps (modules) parallélépipèdiques (1, 11, 21) rangés les uns contre les autres sans espace libre et fixés à la paroi (2, 12, 22), lesquels corps sont composés d'un grand nombre de bandes de matelas de fibres (3, 13, 23, 29) assemblées entre elles, en étant comprimées et disposées sous précontrainte dans une direction parallèle à la paroi (2, 12, 22), caractérisé en ce qu'au moins un moyen de liaison (4, 14, 24), filiforme et résistant à la température, qui est passé alternativement, sans coudes, à travers les côtés (5, 15, 25) exempts de précontrainte, des modules (1, 11, 21) mutuellement adjacents, et qui s'étend de la surface (6, 16) du revêtement de protection thermique jusqu'à la paroi (2, 12, 22), maintient les modules (1, 11, 21) assemblés dans une liaison durablement élastique.

2. Revêtement de protection thermique selon la revendication 1, caractérisé en ce que le moyen de liaison filiforme (4, 14, 24) est disposé en hélice.

3. Revêtement de protection thermique selon la revendication 1 ou 2, caractérisé en ce que le moyen de liaison filiforme (4, 14, 24) est composé de fibres céramiques.

4. Revêtement de protection thermique selon l'une des revendications précédentes, caractérisé en ce que les modules (11) sont munis sur le côté chaud (16) d'entailles (17) s'étendant parallèlement à leurs côtés (15) exempts de contrainte.

5. Revêtement de protection thermique selon la revendication 4, caractérisé en ce que les entailles (17) sont prévues à un écartement de 50 à 100 mm.

6. Revêtement de protection thermique selon la revendication 4 ou 5, caractérisé en ce que les entailles (17) s'enfoncent dans le module (11) sur environ 1/4 à 1/3 de la profondeur de ce dernier.

7. Revêtement de protection thermique selon l'une des revendications 1 à 6, caractérisé en ce qu'un moyen de liaison filiforme (18), fait d'une matière non résistante à la chaleur, est passé de préférence sans coudes, alternativement, à travers au moins deux des bandes de matelas de fibres comprimées (13) des modules (1, 11, 21), ledit moyen reliant les bandes de matelas de fibres (23) entre elles et les maintenant assemblées en corps parallélépipédiques précontraints (11).

8. Revêtement de protection thermique selon la revendication 7, caractérisé en ce que le moyen de liaison filiforme (18) est composé d'une matière organique.

9. Revêtement de protection thermique selon la revendication 7 ou 8, caractérisé en ce que le moyen de liaison filiforme (18) est disposé en hélice.

10. Revêtement de protection thermique selon l'une des revendications 1 à 3, caractérisé en ce qu'au moins un autre corps (30) réalisé en bandes de matelas de fibres (29) d'une autre qualité est fixé à la surface du corps de base parallélépipédique (27) du module (21) qui est éloignée de la paroi (22), par un moyen de liaison filiforme et résistant à la température (28) qui est passé sans coudes.

11. Revêtement de protection thermique selon la revendication 10, caractérisé en ce que le moyen de liaison filiforme (28) est disposé en hélice.

12. Revêtement de protection thermique selon la revendication 10 ou 11, caractérisé en ce que le moyen de liaison filiforme (28) est composé de fibres céramiques.
